# EUROPEAN PATENT SPECIFICATION

(11) **EP 2 910 754 B1**
(45) Date of publication and mention of the grant of the patent: **18.10.2017**
(21) Application number: 13858126.9
(22) Date of filing: 25.10.2013
(51) Int. Cl.: F02D 19/02, F02D 41/02, F02D 41/14, F02D 45/00, F02M 21/02

(54) **GAS ENGINE**
GASMOTOR
MOTEUR À GAZ

(30) Priority: 30.11.2012 JP 2012262261
(43) Date of publication of application: 26.08.2015
(73) Proprietor: Yanmar Co., Ltd., Osaka-shi, Osaka 530-8311 (JP)
(72) Inventor: OTSUBO, Hiroyuki, Osaka-shi, Osaka 530-8311 (JP)
(74) Representative: Hinkelmann, Klaus
(86) International application number: PCT/JP2013/078992
(87) International publication number: WO 2014/083985

(56) References cited:
- DE-A1-102011 003 681
- JP-A- 2007 332 820
- JP-A- 2012 154 276
- US-A1- 2004 089 279

## Description

### Technical Field

The present invention relates to a gas engine that is adjustable in accordance with calorie changes of fuel gas.

### Background Art

Air-fuel ratio control in gas engines is generally set up for fuel gas of a predetermined composition. Nevertheless, the composition of fuel gas actually supplied can vary.

Accordingly, prior art technology suggested a gas engine that controls the air-fuel ratio based on fuel gas measurements obtained with a gas chromatography detector or like gas composition meter (e.g., see Patent Document 1).

### Citation List

### Patent Literature

Patent Document 1: Japanese Patent Application Publication, Tokukai, No. 2003-148187

### Summary of the Invention

### Problems to Be Solved by the Invention

In the conventional gas engine mentioned above, however, the gas chromatography detector (gas composition meter) contains a column that degrades over long-time use. Therefore, the column needs to be replaced regularly, which adds to equipment and labor cost.

In addition, the standard curve of the gas chromatography detector (gas composition meter) can alter due to, for example, weather changes and column degradation. The standard curve therefore needs to be re-plotted regularly using standard gas. The gas chromatography detector (gas composition meter) is difficult to handle and even unusable where temperature could change drastically

It also takes so much time to obtain results from the measurement of fuel gas composition that the fuel gas, by the time it reaches the cylinder head, could have a different composition from the measured composition. This discrepancy may be addressed by improving on the fuel gas supply path in such a manner that the fuel gas reaching the cylinder head can have the same composition as the measured composition. This structure however adds to the complexity of the device.

The present invention, conceived in view of these problems, has an object to provide a gas engine capable of controlling an air-fuel ratio in accordance with changes in the composition of fuel gas.

US 2004/089279 A1 discloses an apparatus for air/fuel ratio control, whereby a control valve module for controlling an air/fuel ratio in gaseous-fuelled engines operating with a near-stoichiometric air/fuel ratio comprises a valve module having a valve housing and a valve; an actuator having an actuator housin integral to the valve housing, the actuator controlling movement of the valve; and a control module integral to the actuator housing and having an interface, the control module in communication with the actuator, the control module comprising comparator means for comparing a signal from a heated exhaust gas oxygen (HEGO) sensor to a target voltage to produce an error signal; actuator control means for commanding the actuator to move the valve from a default position to a new position based upon the error signal and one of a no position dither and steady state feedback strategy, a position dither and steady state feedback strategy, and a position dither and duty-cycle feedback strategy. Valves and their opening degrees are not discussed.

### Solution to Problem

To solve the problems, a gas engine in accordance with the present invention controls an air-fuel ratio by means of a single fuel-flow-rate-regulating valve set up so as to open to a valve opening degree (A) equal to a reference opening degree (B) in a particular engine operating environment created using reference fuel gas, the gas engine including a control unit that resets: the valve opening degree to a downwardly modified reference opening degree that is lower than the reference opening degree when, during actual operation, either the valve opening degree in the particular engine operating environment is lower than the reference opening degree or an engine output achieved with the reference opening degree is higher than a setup output obtainable in the particular engine operating environment; and the valve opening degree to a value higher than the reference opening degree when, during actual operation, either the valve opening degree in the particular engine operating environment is higher than the reference opening degree or the engine output achieved with the reference opening degree is lower than the setup output obtainable in the particular engine operating environment.

The gas engine may include two or more of the valve that provide a necessary flow rate achieved by the single valve.

The gas engine may be such that: the control unit, after resetting the valve opening degree to the downwardly modified reference opening degree, resets an air-fuel ratio control parameter that is adjustable by manipulating the valve to a value that is decreased according to a downward modification ratio; and the control unit, after resetting the valve opening degree to an upwardly modified reference opening degree, resets an air-fuel ratio control parameter that is adjustable by manipulating the valve to a value that is increased according to an upward modification ratio.

The gas engine may be such that: the valves include a first valve and a second valve, the first valve having a lower responsiveness and a greater fuel flow rate adjustment range than the second valve; the gas engine performs perturbation by means of the second valve; the first valve has a valve opening degree adjusted and a reference opening degree specified so that the second valve opens to a valve opening degree equal to a predetermined value in the particular engine operating environment created using the reference fuel gas; and the gas engine including a control unit that resets: the opening degree of the first valve to a value lower than the reference opening degree of the first valve when, during actual operation, either the valve opening degrees in the particular engine operating environment is lower than the specified reference opening degree or the engine output achieved with the reference opening degree is higher than the setup output obtainable in the particular engine operating environment; and the opening degree of the first valve to a value higher than the reference opening degree of the first valve when, during actual operation, either the valve opening degrees in the particular engine operating environment is higher than the specified reference opening degree or the engine output achieved with the reference opening degree is lower than the setup output obtainable in the particular engine operating environment.

The gas engine may be such that: the control unit, after resetting the valve opening degrees to the downwardly modified reference opening degree, resets an air-fuel ratio control parameter that is adjustable by manipulating the second valve to a value that is decreased according to a downward modification ratio; and the control unit, after resetting the valve opening degrees to an upwardly modified reference opening degree, resets an air-fuel ratio control parameter that is adjustable by manipulating the second valve to a value that is increased according to an upward modification ratio.

To solve the problems, another gas engine in accordance with the present invention is of a single point injection type that controls an air-fuel ratio by means of a single injector set up so as to open to a valve opening time equal to a reference valve opening time in a particular engine operating environment created using reference fuel gas, the gas engine including a control unit that resets: the valve opening time of the injector to a downwardly modified reference valve opening time that is lower than the reference valve opening time when, during actual operation, either the valve opening time in the particular engine operating environment is shorter than the reference valve opening time or an engine output achieved with the reference valve opening time is higher than a setup output obtainable in the particular engine operating environment; and the valve opening time of the injector to an upwardly modified reference valve opening time that is longer than the reference valve opening time when, during actual operation, either the valve opening time in the particular engine operating environment is longer than the reference valve opening time or the engine output achieved with the reference valve opening time is lower than the setup output obtainable in the particular engine operating environment.

The gas engine may be such that: the control unit, after resetting the valve opening time of the injector to the downwardly modified reference valve opening time, resets an air-fuel ratio control parameter that is adjustable by manipulating the injector to a value that is decreased according to a downward modification ratio; and the control unit, after resetting the valve opening time of the injector to the upwardly modified reference valve opening time, resets an air-fuel ratio control parameter that is adjustable by manipulating the injector to a value that is increased according to an upward modification ratio.

The gas engine may be of a multipoint injection type including the injector for each cylinder head or for each set of cylinder heads.

To solve the problems, the gas engine in accordance with the present invention may be such that: there is provided an air-fuel-ratio sensor of universal exhaust gas oxygen type upstream of catalyst in an exhaust path; and the control unit controls perturbation based on an air-fuel ratio measured by the air-fuel-ratio sensor and estimates a gas calorie from a variation range of the measured air-fuel ratio to adjust an air-fuel ratio control parameter.

### Advantageous Effects of the Invention

According to the present invention, the air-fuel ratio is controlled in accordance with changes in the composition of the fuel gas.

### Brief Description of Drawings

FIG. 1 is a schematic illustrating the overall arrangement of a gas engine in accordance with the present invention.
FIG. 2 is a block diagram of the arrangement of a fuel/intake air mixing unit in the gas engine shown in FIG. 1.
FIG. 3 is a graph representing the relationship between a fuel gas flow rate and an intake air flow rate that can vary with a calorie change of fuel gas.
FIG. 4 is a graph representing temporal changes of an air excess ratio, the opening degree of a solenoid valve, and a sensor output in perturbation control.
FIG. 5 is a graph showing in detail temporal changes of the opening degree of a fuel-flow-rate-regulating valve in perturbation control using a solenoid valve.
FIG. 6 is a graph representing the relationship between an air-fuel ratio control parameter and a dimension of a purification window in solenoid valve control.
FIG. 7 is a flow diagram depicting a control process, implemented by a control unit, that takes calorie changes of fuel gas into account.
FIG. 8(a) is a schematic illustrating another arrangement of an air intake section, and FIG. 8(b) is a schematic illustrating a further arrangement of the air intake section.
FIG. 9(a) is a schematic illustrating another arrangement of the mixing unit, and FIG. 9(b) is a schematic illustrating a further arrangement of the mixing unit.
FIG. 10 is a flow diagram depicting a control process, implemented by a control unit, that takes into account calorie changes of fuel gas in a gas engine in accordance with another embodiment of the present invention.
FIG. 11(a) to FIG. 11(c) are schematics illustrating various embodiments in which injector(s) is/are used as the air intake section.
FIG. 12 is a flow diagram depicting a control process, implemented by a control unit, that takes into account calorie changes of fuel gas in a gas engine in accordance with another embodiment of the present invention.
FIG. 13 is a flow diagram depicting a control process, implemented by a control unit, that takes into account calorie changes of fuel gas in a gas engine in accordance with a further embodiment of the present invention.

### Description of Embodiments

The following will describe embodiments of the present invention in reference to drawings.

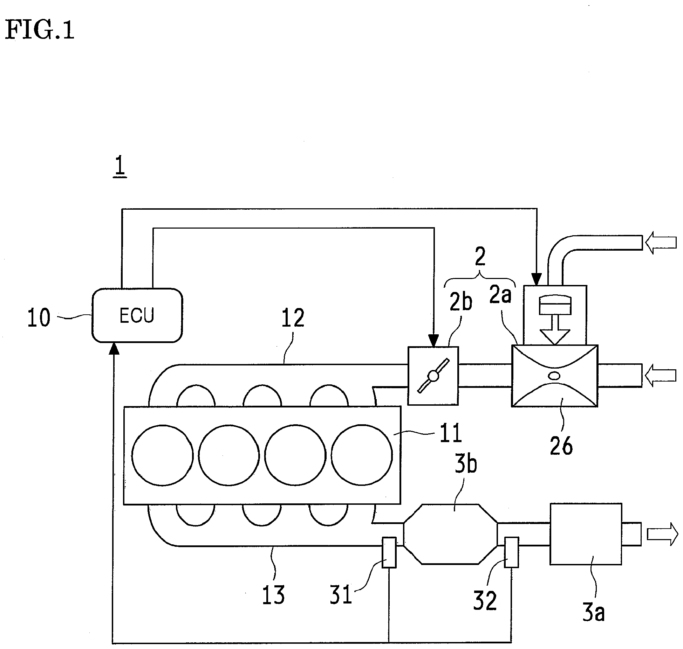

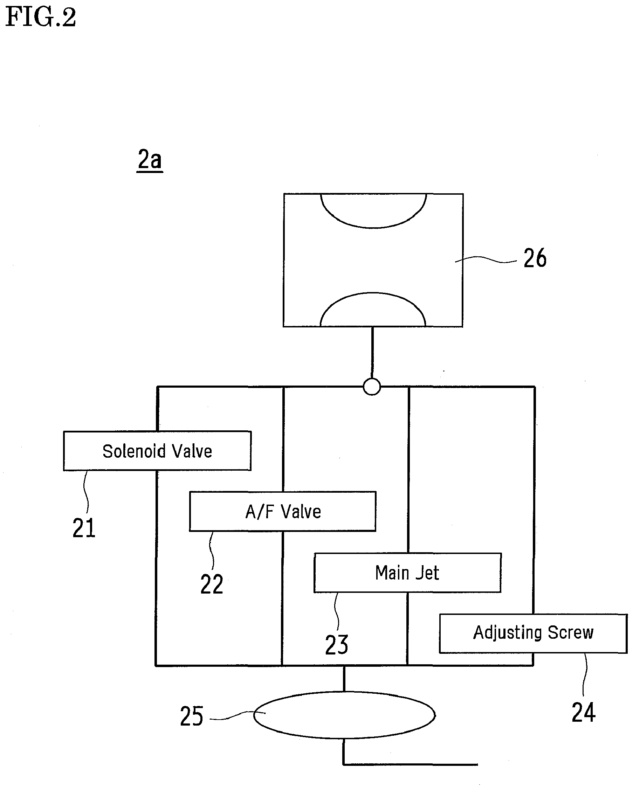

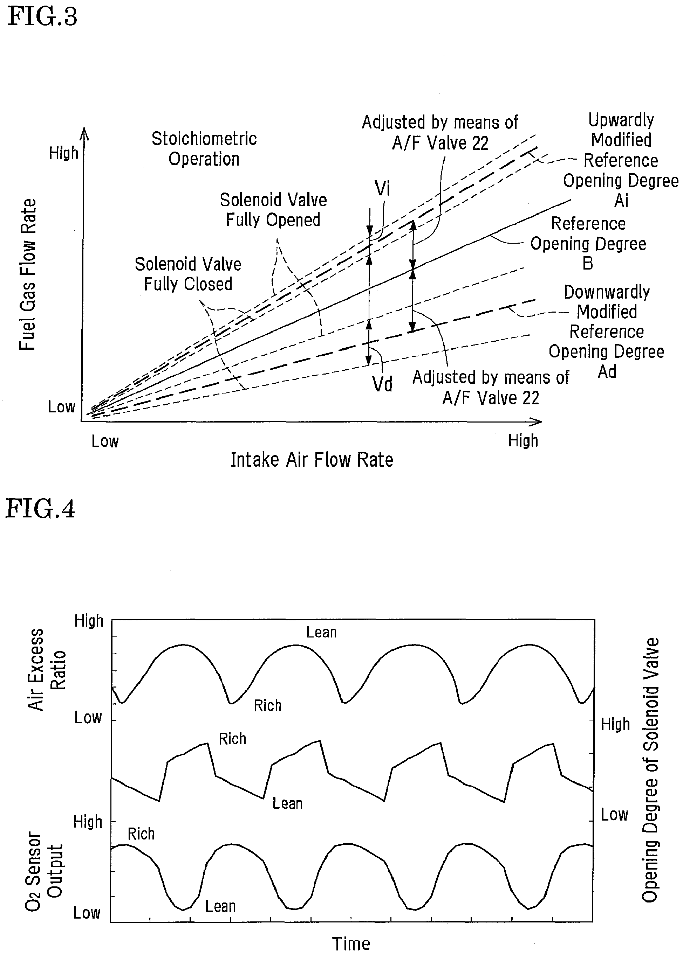

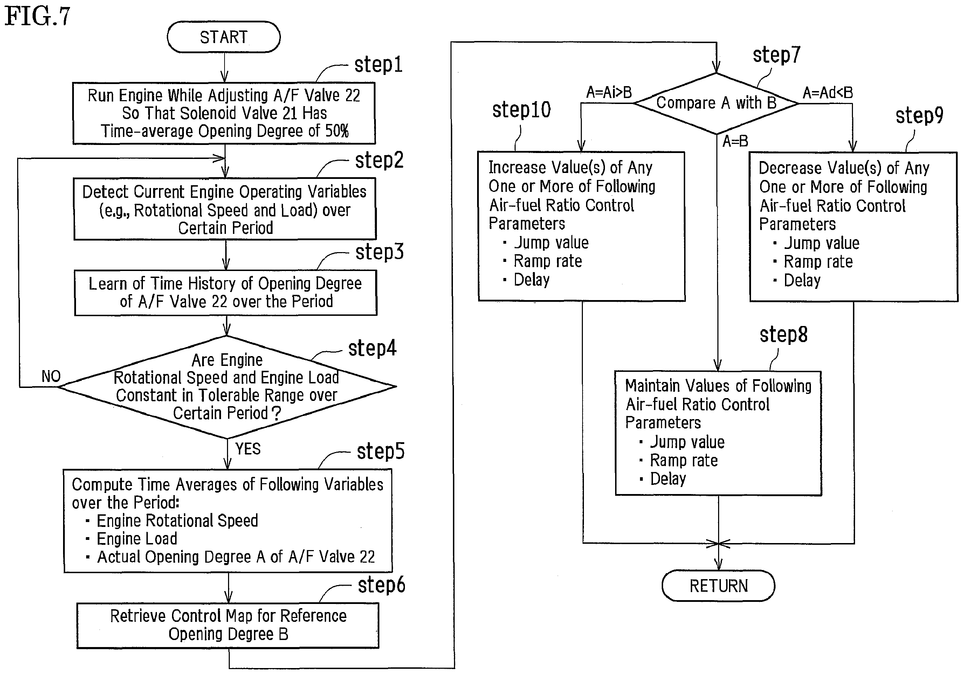

FIG. 1 is a schematic illustrating the overall arrangement of a gas engine 1 in accordance with the present invention. FIG. 2 illustrates a fuel/intake air mixing unit 2a in the gas engine 1. FIG. 3 is a correlation diagram for an intake air flow rate and a fuel gas flow rate achieved by a solenoid valve 21 and an A/F valve 22 in the gas engine 1. FIG. 4 is a diagram representing a perturbation control process implemented by a control unit 10 in the gas engine 1. FIG. 7 is a flow chart depicting a control process, implemented by the control unit 10, that takes calorie changes of fuel gas into account.

The gas engine 1 includes the solenoid valve 21 and the A/F valve 22. The gas engine 1 further includes a control unit 10. If the actual valve opening degree A of the A/F valve 22 is lower than the reference opening degree B of the A/F valve 22 in stoichiometric operation running on reference fuel gas at a predetermined engine rotational speed and under a predetermined engine load, the control unit 10 resets the opening degree of the A/F valve 22 to a decreased value and performs perturbation by means of the solenoid valve 21. On the other hand, if the actual valve opening degree A of the A/F valve 22 is higher than the reference opening degree B of the A/F valve 22 in stoichiometric operation running on reference fuel gas at a predetermined engine rotational speed and under a predetermined engine load, the control unit 10 resets the opening degree of the A/F valve 22 to an increased value and performs perturbation by means of the solenoid valve 21.

The overall arrangement of the gas engine 1 will be described first.

The gas engine 1 includes a mixing unit 2a where air and fuel gas are mixed. The mixing unit 2a is disposed on an air intake path 12 that is connected to a cylinder head 11. A throttle valve 2b is disposed between the mixing unit 2a and the cylinder head 11. These mixing unit 2a and throttle valve 2b constitute the air intake section 2, which is controlled by the control unit 10 through its signals.

As illustrated in FIG. 2, in the mixing unit 2a, the solenoid valve 21, the A/F valve 22, a main jet 23, and an adjusting screw 24 are connected in parallel between a regulator 25 and the mixer 26.

In order to control stoichiometric operation where the air excess ratio is equal to the theoretical air-fuel ratio (λ = 1), the solenoid valve 21 is constituted by a valve that exhibits flow rate characteristics so designed that the area of the opening through which fuel gas is passed can be adjusted. The solenoid valve 21 is movable, closing its channel under a biasing force from a flat spring or another type of spring and as it is moved by an electromagnetic coil, opening the channel to a predetermined opening degree. The solenoid valve 21 opens/closes at 25 hertz and is capable of adjusting the opening degree by changing its open/close duty ratio. The solenoid valve 21, by no means limited to the one that opens/closes at 25 hertz, may be any solenoid valve that is used in this kind of perturbation control and open/close at various frequencies. Although this arrangement gives the solenoid valve 21 a narrow flow rate adjustment range, it enables the solenoid valve 21 to adjust the flow rate quickly. The valve constituting the solenoid valve 21 and exhibiting the particular flow rate characteristics above may be constituted by a proportional control valve.

In order to control operation from stoichiometric where the air excess ratio is equal to the theoretical air-fuel ratio (λ = 1) to lean (lean burn) where the air excess ratio is 1.4 to 1.6 (λ = 1.4 to 1.6), the A/F valve 22 is constituted by a proportional control valve that exhibits flow rate characteristics so designed that the area of the opening through which fuel gas is passed can be adjusted. The A/F valve 22 is capable of adjusting the opening degree of the movable valve a step at a time through the rotation of the stepper motor. Although this arrangement does not enable the A/F valve 22 to adjust the flow rate quickly, it gives the A/F valve 22 a wide flow rate adjustment range so that a wide range of air excess ratio is available.

The main jet 23 is a valve that, working in conjunction with the solenoid valve 21 and the A/F valve 22, enables adjustment of the amount of fuel flowing from the regulator 25 to the mixer 26. Unlike the solenoid valve 21 and the A/F valve 22, the main jet 23 has a fixed opening degree that is denoted by a number.

The adjusting screw 24 is a valve that enables manual adjustment of the amount of fuel gas and typically secured together with the main jet 23.

The regulator 25 is capable of controlling the pressure of fuel gas so that the fuel gas can always be supplied at a constant pressure.

The mixer 26 is constituted by a Venturi tube where air and fuel gas are mixed. The mixer 26 mixes fuel gas and air by the Venturi effect of the intake air in accordance with the opening degree of the throttle valve 2b disposed downstream of the mixer 26.

A silencer 3a is disposed on an exhaust path 13 that is connected to the cylinder head 11. A three-way catalyst 3b is disposed between the silencer 3a and the cylinder head 11. A UEGO (universal exhaust gas oxygen) sensor 31 is disposed on the exhaust gas inlet side of the three-way catalyst 3b. An HEGO (heated exhaust gas oxygen) sensor 32 is disposed on the exhaust gas outlet side of the three-way catalyst 3b.

During lean operation where the air excess ratio is 1.4 to 1.6 (λ = 1.4 to 1.6), the solenoid valve 21 in the mixing unit 2a is closed, and the opening/closing degree of the A/F valve 22 is controlled by the control unit 10, so as to control the lean operation.

In the mixing unit 2a, during stoichiometric operation, the A/F valve 22 is set up so as to open to a reference opening degree B that is equal to a middle opening degree in the opening/closing region, for example, an opening degree of 50%, and the solenoid valve 21 is set up so as to open to a reference opening degree B that is equal to a middle opening degree in the opening/closing region, for example, a time-average opening degree of 50%. The control unit 10 controls perturbation during stoichiometric operation where the air excess ratio is near the theoretical air-fuel ratio (λ = 1), by controlling the solenoid valve 21 so that the opening/closing degree of the solenoid valve 21 can increase above or decrease below the reference opening degree B for stoichiometric operation; hence the air-fuel ratio can approach lean burn or rich burn.

The A/F valve 22 and the solenoid valve 21 are opened to the middle opening degree in the opening/closing region during stoichiometric operation because the precision of proportional control is better at the middle opening degree than at lower and higher opening degrees. Therefore, if the precision of proportional control does not vary throughout the opening/closing region as a result of compensation at lower and higher opening degrees, the valves may not necessarily be opened to the middle opening degree. In view of lean operation of the gas engine 1, the A/F valve 22 is preferably set up so as to open to an opening degree higher than the middle opening degree during stoichiometric operation to facilitate the closing of the A/F valve 22 during lean operation. Throughout the following description, assume for the sake of convenience that the reference opening degree B for the solenoid valve 21 refers to a time-average opening degree of 50% and also that the reference opening degree B for the A/F valve 22 refers to an opening degree of 50%.

When the valves are open to the reference opening degree B as mentioned earlier, for example, when the A/F valve 22 and the solenoid valve 21 are open to the opening degree of 50% and the time-average opening degree of 50% respectively, as well as fuel gas with a predetermined reference calorie is supplied, the gas engine 1 runs in stoichiometric operation mode where the air excess ratio is equal to the theoretical air-fuel ratio (λ = 1) at a predetermined engine rotational speed and under a predetermined engine load.

Therefore, for example, if the actually supplied fuel gas has a lower calorie than the predetermined reference calorie, the fuel gas fails to provide sufficient calorie. Therefore, the gas engine 1 does not run in stoichiometric operation mode at the predetermined engine rotational speed and under the predetermined engine load, as illustrated in FIG. 3, unless the missing calorie is compensated for by additional fuel gas (even when it is attempted to run the gas engine 1 in stoichiometric operation mode at the engine rotational speed and under the engine load based on which the reference opening degree B was specified). Therefore, if calorie-deficient fuel gas is used in actual operation, the actual valve opening degree A is reset to an upwardly modified reference opening degree Ai calculated by increasing the valve opening degree A from the reference opening degree B by an equivalent of the missing calorie, to enable stoichiometric operation at the engine rotational speed and under the engine load based on which the reference opening degree B was specified. This switching to the upwardly modified reference opening degree Ai is done by resetting the valve opening degree A of the A/F valve 22 to an increased value.

On the other hand, if the actually supplied fuel gas has a higher calorie than the reference fuel gas, the fuel gas provides excess calorie. Therefore, the gas engine 1 does not run in stoichiometric operation mode at the predetermined engine rotational speed and under the predetermined engine load unless the fuel gas is reduced by an equivalent of the excess calorie (even when it is attempted to run the gas engine 1 in stoichiometric operation mode at the engine rotational speed and under the engine load based on which the reference opening degree B was specified). Therefore, if calorie-excessive fuel gas is used in actual operation, the actual valve opening degree A is reset to a downwardly modified reference opening degree Ad calculated by decreasing the valve opening degree A from the reference opening degree B by an equivalent of the excess calorie, to enable stoichiometric operation at the engine rotational speed and under the engine load based on which the reference opening degree B was specified. This switching to the downwardly modified reference opening degree Ad is done by resetting the valve opening degree A of the A/F valve 22 to a decreased value.

The upwardly modified reference opening degree Ai and the downwardly modified reference opening degree Ad in FIG. 3 are mere examples. Every time the gas engine 1 is run in stoichiometric operation mode on actually supplied fuel gas at the predetermined engine rotational speed and under the predetermined engine load, it is determined how much the actual valve opening degree A of the A/F valve 22 differs from the reference opening degree B, to reset the valve opening degree A of the A/F valve 22.

In the description above, it is determined whether or not the actual valve opening degree A is equal to the reference opening degree B when the engine rotational speed and the engine load during stoichiometric operation are kept constant. If the actual valve opening degree A is not equal to the reference opening degree B, the valve opening degree A of the A/F valve 22 is reset by either being increased to the upwardly modified reference opening degree Ai or being decreased to the downwardly modified reference opening degree Ad. In other words, the actual valve opening degree A is reset based on the engine rotational speed and engine load for stoichiometric operation. Alternatively, the actual valve opening degree A of the A/F valve 22 may be reset based on the reference opening degree B. In other words, it may be determined whether or not the predetermined engine rotational speed and engine load for stoichiometric operation are achieved when the A/F valve 22 is opened to the reference opening degree B. If they are not achieved, the actual valve opening degree A of the A/F valve 22 may be reset by either being increased to the upwardly modified reference opening degree Ai or being decreased to the downwardly modified reference opening degree Ad, so as to achieve the engine rotational speed and engine load for stoichiometric operation that would otherwise be achieved with the reference opening degree B.

In stoichiometric operation, after resetting the actual valve opening degree A of the A/F valve 22 either to the upwardly modified reference opening degree Ai or to the downwardly modified reference opening degree Ad, perturbation is controlled by controlling the opening/closing degree of the solenoid valve 21. The variation Vi of the air excess ratio that results from the full opening from full closure of the solenoid valve 21 to the upwardly modified reference opening degree Ai differs greatly from the variation Vd of the air excess ratio that results from the full opening from full closure of the solenoid valve 21 to the downwardly modified reference opening degree Ad. Therefore, to control perturbation during stoichiometric operation using the solenoid valve 21, it is preferred that after the actual valve opening degree A is reset from the reference opening degree B to the upwardly modified reference opening degree Ai, the opening/closing degree of the solenoid valve 21 is increased in accordance with the ratio by which the valve opening degree A is reset (increased) for perturbation control, and that after the actual valve opening degree A is reset from the reference opening degree B to the downwardly modified reference opening degree Ad, the opening/closing degree of the solenoid valve 21 is decreased in accordance with the ratio by which the valve opening degree A is reset (decreased) for perturbation control.

Next, the control processes implemented by the control unit 10 will be described.

The control unit 10 controls stoichiometric operation by adjusting the opening degree of the A/F valve 22 while maintaining the time-average opening degree of the solenoid valve 21 at 50% so that the air excess ratio, as measured/detected by the UEGO sensor 31 disposed on the inlet side of the three-way catalyst 3b, is equal to the theoretical air-fuel ratio (λ = 1). In this situation, if the reference fuel gas is being supplied, the opening degree of the A/F valve 22 is also maintained at 50%, being equal to the reference opening degree B.

The control unit 10 controls perturbation by controlling the opening/closing degree of the solenoid valve 21 based on the results of measurement/detection by the UEGO sensor 31 disposed on the inlet side of the three-way catalyst 3b and the HEGO sensor 32 disposed on the outlet side of the three-way catalyst 3b (downstream of the UEGO sensor 31). More specifically, the control unit 10 controls perturbation in the following manner.

The oxygen concentration in the exhaust gas is measured by the UEGO sensor 31 immediately before the exhaust gas flows into the three-way catalyst 3b. If the UEGO sensor 31 indicates rich operation, the solenoid valve 21 is closed to such a degree that could lead to lean operation as illustrated in FIG. 4.

The excessive oxygen in the exhaust gas is then absorbed by the three-way catalyst 3b. As the three-way catalyst 3b reaches saturation, the HEGO sensor 32, disposed downstream of the three-way catalyst 3b, starts to indicate lean operation in a predetermined response time after the switching of the solenoid valve 21.

Since the solenoid valve 21 has been closed to such a degree that could lead to lean operation, the UEGO sensor 31, disposed upstream of the three-way catalyst 3b, indicates lean operation. The solenoid valve 21 is opened to such a degree that could lead to rich operation in accordance with the indication.

The oxygen absorbed by the three-way catalyst 3b is then released into the exhaust gas, purifying the exhaust gas. As the oxygen absorbed by the three-way catalyst 3b runs out, the HEGO sensor 32, disposed downstream of the three-way catalyst 3b, starts to indicate rich operation in a predetermined response time after the switching of the solenoid valve 21.

After that, the air-fuel ratio is changed at predetermined intervals of approximately 1 to 2 seconds (this process is called perturbation) so that the HEGO sensor 32, disposed downstream of the three-way catalyst 3b, indicates an air-fuel ratio that moderately switches between lean operation and rich operation. In such a situation, the three-way catalyst 3b stays active, repeatedly absorbing and releasing oxygen.

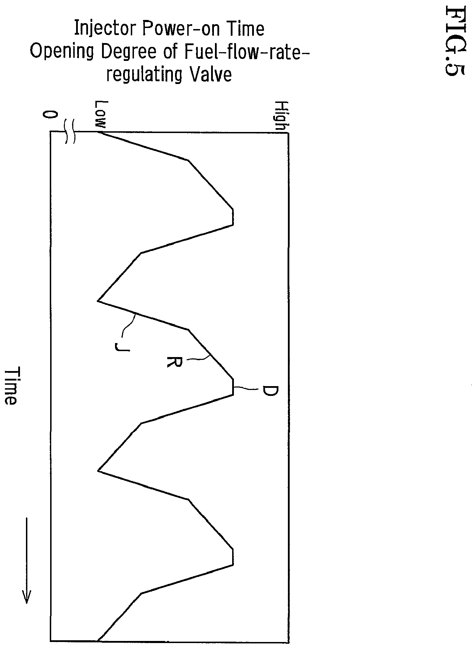

Exemplary control parameters that indicate the opening degree of the solenoid valve 21 include a jump value J by which the valve is rapidly opened in a predetermined time, a ramp rate R at which the valve is moderately opened in a predetermined time subsequent to the jump, and a delay D that lasts until the solenoid valve 21 is rapidly closed (see FIG. 5). The control unit 10 has loaded a control map prepared by taking these control parameters into account, so that the control unit 10 can implement an ideal perturbation control process by controlling each of the air-fuel ratio control parameters so as to provide an optimal purification window W.

Next will be described a control process, implemented by the control unit 10, that takes into account calorie changes of fuel gas.

As illustrated in FIG. 7, first, the gas engine 1 starts stoichiometric operation where the air excess ratio is equal to the theoretical air-fuel ratio (λ = 1). This stoichiometric operation is carried out by adjusting the opening degree of the A/F valve 22 while maintaining the time-average opening degree of the solenoid valve 21 at 50% (step 1). The stoichiometric operation would proceed as expected if fuel gas is supplied with the A/F valve 22 being opened to the reference opening degree B, provided that the gas engine 1 is running at the engine rotational speed and under the engine load based on which the reference opening degree B was specified. However, the fuel gas supplied to the gas engine 1 during actual operation may not have the same composition as the fuel gas that was used in determining the reference opening degree B. The fuel gas may vary and have higher or lower calories over the course of the day.

To learn of the calorie changes of the fuel gas, first, the engine rotational speed and engine load are detected during stoichiometric operation over the course of a certain period (step 2). If reference fuel gas is supplied, the A/F valve 22 is opened to the reference opening degree B. However, if the fuel gas has a lower calorie than the reference fuel gas, the actual valve opening degree A of the A/F valve 22 is equal to the upwardly modified reference opening degree Ai, which is an opening degree higher than the reference opening degree B. On the other hand, if the fuel gas has a higher calorie than the reference fuel gas, the actual valve opening degree A of the A/F valve 22 is equal to the downwardly modified reference opening degree Ad, which is an opening degree lower than the reference opening degree B.

Accordingly, the time history of the valve opening degree A of the A/F valve 22 over the course of the certain period over which the engine rotational speed and engine load during stoichiometric operation were detected is detected (step 3).

Of the certain period over which the engine rotational speed and engine load during stoichiometric operation were detected, the period during which the engine rotational speed and engine load were constant is detected (step 4).

If the period during which the engine rotational speed and engine load were constant does not reach a predetermined length of time, it indicates that the actual valve opening degree A is unstable. Step 2 and subsequent steps of the perturbation control process are repeated until a stable valve opening degree A is registered. On the other hand, if the period during which the engine rotational speed and engine load were constant reaches the predetermined length of time, the detected value is taken as the actual valve opening degree A (step 5).

Next, a control map for the reference opening degree B is loaded (step 6) to compare the actual valve opening degree A with the reference opening degree B (step 7).

If the actual valve opening degree A is equal to the reference opening degree B, a perturbation control process by means of the solenoid valve 21 is carried out using an air-fuel ratio control parameter in accordance with the control map for the reference opening degree B (step 8). Then, step 1 and subsequent steps of the perturbation control process are repeated.

If the actual valve opening degree A is equal to the downwardly modified reference opening degree Ad, which is lower than the reference opening degree B, the perturbation control process by means of the solenoid valve 21 is carried out using an air-fuel ratio control parameter modified in accordance with the control map for the downwardly modified reference opening degree Ad (step 9). Then, step 1 and subsequent steps of the perturbation control process are repeated. In the present case, the air-fuel ratio control parameter may be any one of the jump value J, the ramp rate R, and the delay D, and at least one of these parameters is reset to a decreased value to implement the perturbation control process.

If the actual valve opening degree A is equal to the upwardly modified reference opening degree Ai, which is higher than the reference opening degree B, the perturbation control process by means of the solenoid valve 21 is carried out using an air-fuel ratio control parameter modified in accordance with the control map for the upwardly modified reference opening degree Ai (step 10). Then, step 1 and subsequent steps of the perturbation control process are repeated. In the present case, the air-fuel ratio control parameter may be any one of the jump value J, the ramp rate R, and the delay D, and at least one of these parameters is reset to an increased value to implement the perturbation control process.

As mentioned earlier, although the actual valve opening degree A is modified to the downwardly modified reference opening degree Ad, which is lower than the reference opening degree B, or to the upwardly modified reference opening degree Ai, which is higher than the reference opening degree B, the air-fuel ratio is still changed at predetermined intervals of approximately 1 to 2 seconds once the perturbation control process is started. Therefore, if the calorie of the fuel gas changes during the perturbation control process, this change could overlap the change of the air-fuel ratio that results from the perturbation control process. The two changes may be undistinguishable. To address this, during the perturbation control process, the variation range of the air-fuel ratio obtained from the UEGO sensor 31 is compared with the variation range that would result from the perturbation control process using the reference opening degree B. The calorie change of the fuel gas is estimated from the discrepancy between these variation ranges. Then, the air-fuel ratio control parameter(s) is/are reset so that the UEGO sensor 31 indicates an appropriate variation range of the air-fuel ratio, or a range that would result from the perturbation control process using the reference opening degree B and the reference fuel gas.

In the gas engine 1 arranged as above, the calorie changes of the fuel gas are known by appreciating approximately how much the actual valve opening degree A differs from the reference opening degree B.

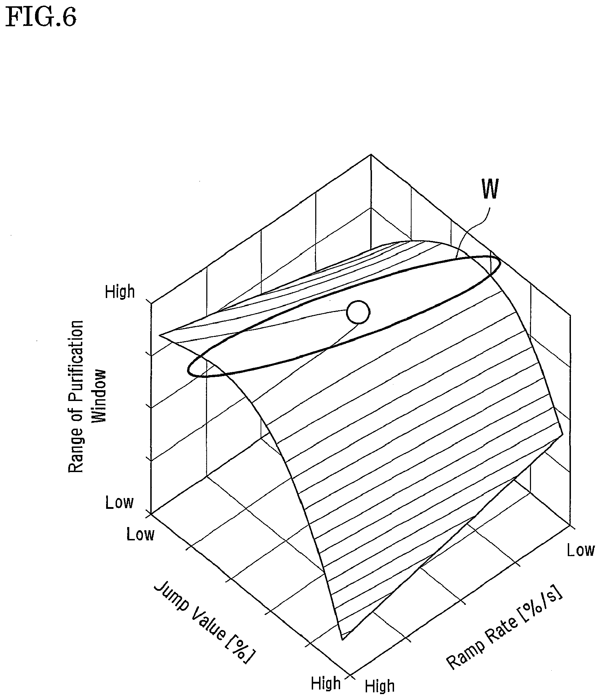

In addition, the stoichiometric operation, lean operation, and perturbation control are carried out on the gas engine 1 after resetting the opening degree of the A/F valve 22 from the reference opening degree B either to the upwardly modified reference opening degree Ai or to the downwardly modified reference opening degree Ad, to take the discrepancy into account. For this reason, the air-fuel ratio control parameter(s), such as the jump value J and/or the ramp rate R, is/are determined appropriately, and a wide purification window W is maintained during the perturbation control process, as illustrated in FIG. 6. This arrangement extends the period over which exhaust gas purifying capability is maintained, requiring less frequent maintenance. The arrangement also does not require an increased amount of noble metal in the catalyst or an increased capability of the catalyst, which prevents additional catalyst-related cost. Furthermore, the gas engine 1 can run even when fuel gas with large calorie changes is used. The arrangement further enables the use of the gas engine 1 across countries and regions where fuel gas has different calories.

These effects are enhanced by adjusting, during the perturbation control process by means of the solenoid valve 21, the opening degree of the solenoid valve 21 in proportion to the amount of adjustment of the opening degree of the A/F valve 22 that is reset from the reference opening degree B either to the upwardly modified reference opening degree Ai or to the downwardly modified reference opening degree Ad.

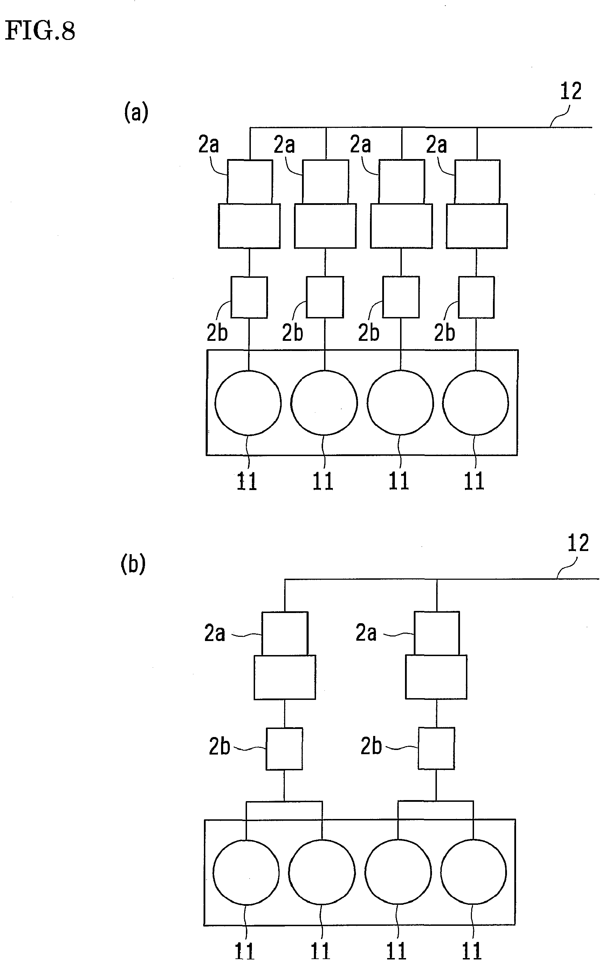

In the present embodiment, there is provided a single mixing unit 2a on the air intake path 12. Alternatively, there may be provided multiple mixing units 2a, one for each cylinder head 11 of the gas engine 1, as illustrated in FIG. 8(a). Further alternatively, there may be provided multiple mixing units 2a, one for every two or more cylinder heads 11, as illustrated in FIG. 8(b) (one mixing unit 2a for every two cylinder heads 11 in FIG. 8(b)).

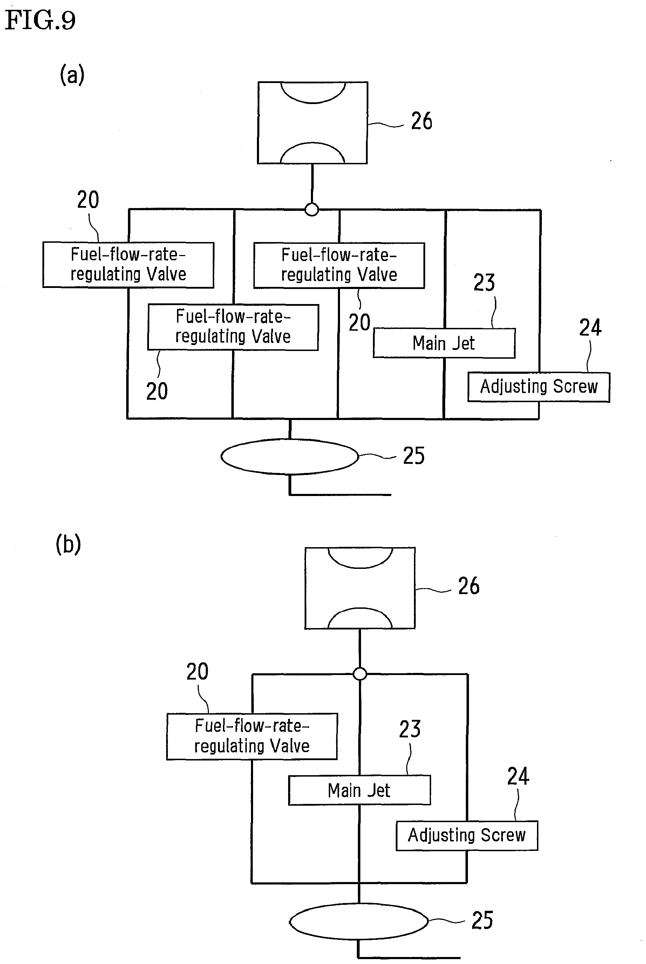

In the present embodiment, the mixing unit 2a is arranged to control the solenoid valve 21 and the A/F valve 22 that exhibit different flow rate characteristics. Alternatively, as illustrated in FIG. 9(a), the mixing unit 2a may be arranged to control two, three, or more fuel-flow-rate-regulating valves 20 (three in FIG. 9(a)) that exhibit the same flow rate characteristics. When this is the case, there may be provided a fuel-flow-rate-regulating valve 20 that functions like the solenoid valve 21 of the present embodiment and a fuel-flow-rate-regulating valve 20 that functions like the A/F valve 22 of the present embodiment. Alternatively, there may be provided fuel-flow-rate-regulating valves 20 that each function like the solenoid valve 21 of the present embodiment and also function like the A/F valve 22 of the present embodiment. In these cases, the fuel-flow-rate-regulating valve 20 may specifically be any valve that are generally used in this kind of fuel gas control, such as a butterfly valve or a solenoid valve.

Furthermore, the present embodiment describes the gas engine 1 with a mixing unit 2a that includes two adjustment valves: the solenoid valve 21 and the A/F valve 22. Alternatively, as illustrated in FIG. 9(b), the mixing unit 2a may include a single fuel-flow-rate-regulating valve 20.

Next will be described a gas engine 1 with a mixing unit 2a that includes a single fuel-flow-rate-regulating valve 20 as mentioned immediately above and a control process that takes calorie changes of fuel gas into account.

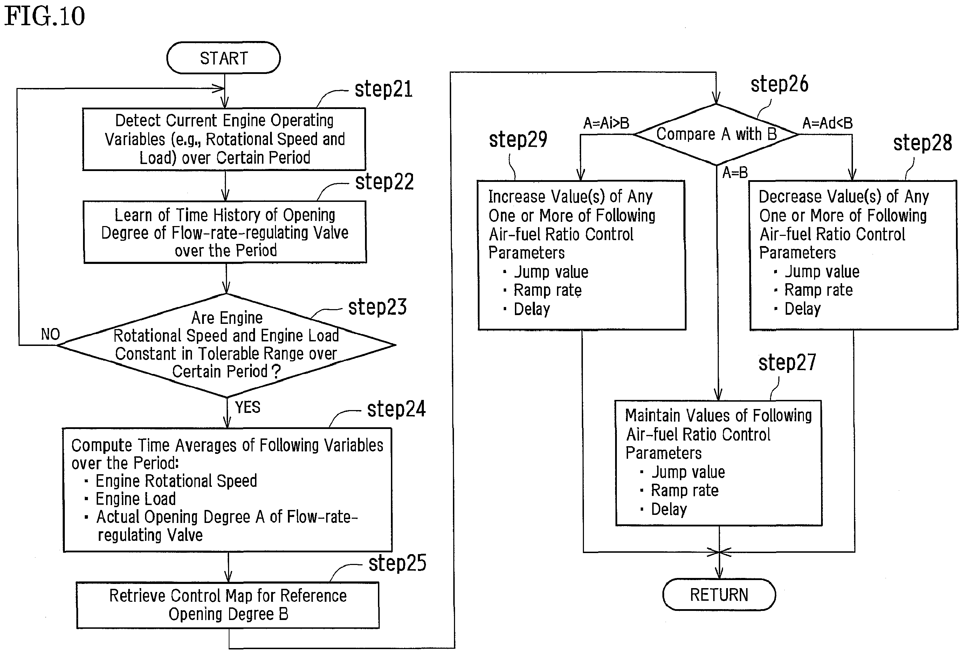

As illustrated in FIG. 10, first, the gas engine 1 starts stoichiometric operation where the air excess ratio is equal to the theoretical air-fuel ratio (λ = 1). This stoichiometric operation is carried out by adjusting the opening degree of the fuel-flow-rate-regulating valve 20. The stoichiometric operation would proceed as expected if fuel gas is supplied with the fuel-flow-rate-regulating valve 20 being opened to the reference opening degree B, provided that the gas engine 1 is running at the engine rotational speed and under the engine load based on which the reference opening degree B was specified. However, the fuel gas supplied to the gas engine 1 during actual operation may not have the same composition as the fuel gas that was used in determining the reference opening degree B. The fuel gas may vary and have higher or lower calories over the course of the day.

To learn of the calorie changes of the fuel gas, first, the engine rotational speed and engine load are detected during stoichiometric operation over the course of a certain period (step 21). If reference fuel gas is supplied, the fuel-flow-rate-regulating valve 20 is opened to the reference opening degree B. However, if the fuel gas has a lower calorie than the reference fuel gas, the actual valve opening degree A of the fuel-flow-rate-regulating valve 20 is equal to the upwardly modified reference opening degree Ai, which is an opening degree higher than the reference opening degree B. On the other hand, if the fuel gas has a higher calorie than the reference fuel gas, the actual valve opening degree A of the fuel-flow-rate-regulating valve 20 is equal to the downwardly modified reference opening degree Ad, which is an opening degree lower than the reference opening degree B.

Accordingly, the time history of the valve opening degree A of the fuel-flow-rate-regulating valve 20 over the course of the certain period over which the engine rotational speed and engine load during stoichiometric operation were detected is detected (step 22).

Of the certain period over which the engine rotational speed and engine load during stoichiometric operation were detected, the period during which the engine rotational speed and engine load were constant is detected (step 23).

If the period during which the engine rotational speed and engine load were constant does not reach a predetermined length of time, it indicates that the actual valve opening degree A is unstable. Step 21 and subsequent steps of the perturbation control process are repeated until a stable valve opening degree A is registered. On the other hand, if the period during which the engine rotational speed and engine load were constant reaches the predetermined length of time, the detected value is taken as the actual valve opening degree A (step 24).

Next, a control map for the reference opening degree B is loaded (step 25) to compare the actual valve opening degree A with the reference opening degree B (step 26).

If the actual valve opening degree A is equal to the reference opening degree B, a perturbation control process by means of the fuel-flow-rate-regulating valve 20 is carried out using an air-fuel ratio control parameter in accordance with the control map for the reference opening degree B (step 27). Then, step 21 and subsequent steps of the perturbation control process are repeated.

If the actual valve opening degree A is equal to the downwardly modified reference opening degree Ad, which is lower than the reference opening degree B, the perturbation control process by means of the fuel-flow-rate-regulating valve 20 is carried out using an air-fuel ratio control parameter modified in accordance with the control map for the downwardly modified reference opening degree Ad (step 28). Then, step 21 and subsequent steps of the perturbation control process are repeated. In the present case, the air-fuel ratio control parameter may be any one of the jump value J, the ramp rate R, and the delay D, and at least one of these parameters is reset to a decreased value to implement the perturbation control process.

If the actual valve opening degree A is equal to the upwardly modified reference opening degree Ai, which is higher than the reference opening degree B, the perturbation control process by means of the fuel-flow-rate-regulating valve 20 is carried out using an air-fuel ratio control parameter modified in accordance with the control map for the upwardly modified reference opening degree Ai (step 29). Then, step 21 and subsequent steps of the perturbation control process are repeated. In the present case, the air-fuel ratio control parameter may be any one of the jump value J, the ramp rate R, and the delay D, and at least one of these parameters is reset to an increased value to implement the perturbation control process.

As mentioned earlier, after the perturbation control process is started, the variation range of the air-fuel ratio obtained from the UEGO sensor 31 is compared with the variation range that would result from the perturbation control process using the reference opening degree B. The calorie change of the fuel gas is estimated from the discrepancy between these variation ranges. Then, the air-fuel ratio control parameter(s) is/are reset so that the UEGO sensor 31 indicates an appropriate variation range of the air-fuel ratio, or a range that would result from the perturbation control process using the reference opening degree B and the reference fuel gas.

The gas engine 1 arranged as above provides effects that are similar to those achieved by the gas engine 1 that includes the aforementioned two adjustment valves.

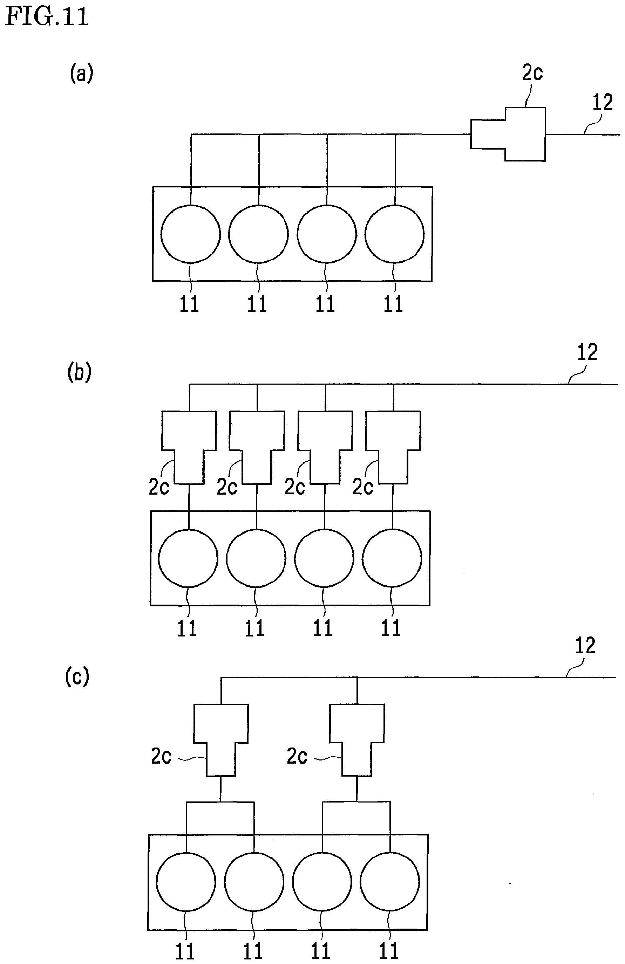

In the embodiment described above, the air intake section 2 is constituted by the throttle valve 2b and the mixing unit 2a that includes at least one valve, such as the fuel-flow-rate-regulating valve 20, the solenoid valve 21, or the A/F valve 22. Alternatively, the air intake section may be constituted by a single injector 2c as illustrated in FIG. 11(a), by multiple injectors 2c, one for each cylinder head 11, as illustrated in FIG. 11(b), or by multiple injectors 2c, one for every two or more cylinder heads 11, as illustrated in FIG. 11(c) (one injector 2c for every two cylinder heads 11 in FIG. 11(c)). In these cases, a reference valve opening time Bt for the injector(s) 2c corresponds to the reference opening degree B in the embodiment described above. The reference valve opening time (= power-on time) Bt for the injector 2c is achieved when the gas engine 1 is run at the predetermined engine rotational speed and under the predetermined engine load in stoichiometric operation mode where the air excess ratio is equal to the theoretical air-fuel ratio (λ = 1) while fuel gas with a predetermined reference calorie is being supplied.

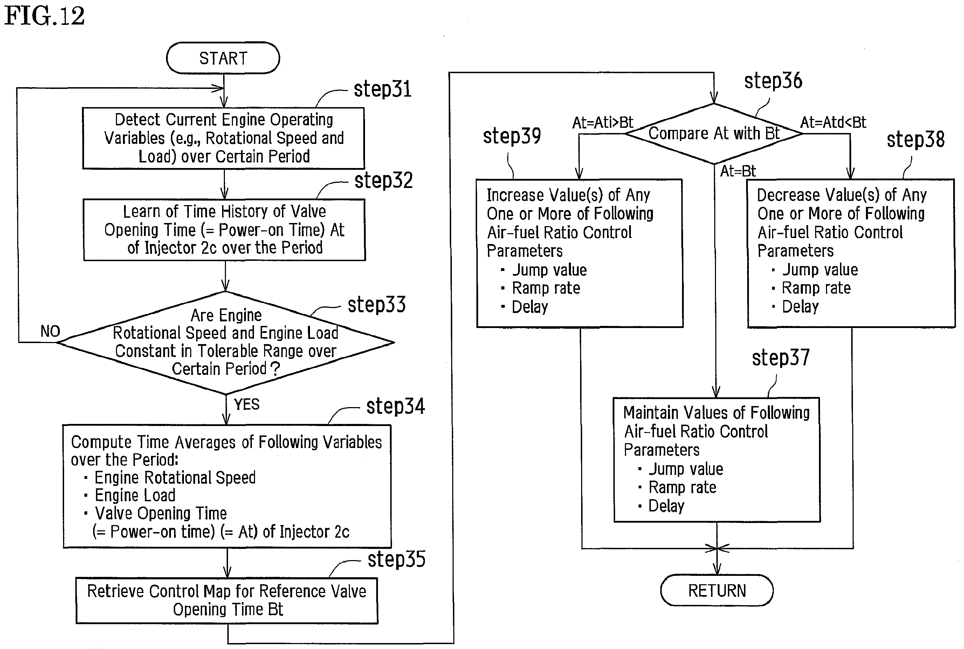

FIG. 12 shows a control process, implemented on a gas engine 1 including an air intake section constituted by a single injector 2c, that takes calorie changes of fuel gas into account.

First, the gas engine 1 starts stoichiometric operation where the air excess ratio is equal to the theoretical air-fuel ratio (λ - 1). This stoichiometric operation is carried out by adjusting the valve opening time (= power-on time) of the injector 2c. The stoichiometric operation would proceed as expected if fuel gas is supplied with the injector 2c being opened to the reference valve opening time Bt, provided that the gas engine 1 is running at the engine rotational speed and under the engine load based on which the reference valve opening time Bt was specified. However, the fuel gas supplied to the gas engine 1 during actual operation may not have the same composition as the fuel gas that was used in determining the reference valve opening time Bt. The fuel gas may vary and have higher or lower calories over the course of the day.

To learn of the calorie changes of the fuel gas, first, the engine rotational speed and engine load are detected during stoichiometric operation over the course of a certain period (step 31). If reference fuel gas is supplied, the injector 2c is opened to the reference valve opening time Bt. However, if the fuel gas has a lower calorie than the reference fuel gas, the actual valve opening time At of the injector 2c is equal to the upwardly modified reference valve opening time Ati, which achieves an opening degree higher than does the reference valve opening time Bt. On the other hand, if the fuel gas has a higher calorie than the reference fuel gas, the actual valve opening time At of the injector 2c is equal to the downwardly modified reference valve opening time Atd, which achieves an opening degree higher than does the reference valve opening time Bt.

Accordingly, the time history of the valve opening time At of the injector 2c over the course of the certain period over which the engine rotational speed and engine load during stoichiometric operation were detected is detected (step 32).

Of the certain period over which the engine rotational speed and engine load during stoichiometric operation were detected, the period during which the engine rotational speed and engine load were constant is detected (step 33).

If the period during which the engine rotational speed and engine load were constant does not reach a predetermined length of time, it indicates that the actual valve opening time At is unstable. Step 31 and subsequent steps of the perturbation control process are repeated until a stable valve opening time At is registered. On the other hand, if the period during which the engine rotational speed and engine load were constant reaches the predetermined length of time, the detected value is taken as the actual valve opening time At (step 34).

Next, a control map for the reference valve opening time Bt is loaded (step 35) to compare the actual valve opening time At with the reference valve opening time Bt (step 36).

If the actual valve opening time At is equal to the reference valve opening time Bt, a perturbation control process by means of the injector 2c is carried out using an air-fuel ratio control parameter in accordance with the control map for the reference valve opening time Bt (step 37). Then, step 31 and subsequent steps of the perturbation control process are repeated.

If the actual valve opening time At is equal to the downwardly modified reference valve opening time Atd, which is shorter than the reference valve opening time Bt, the perturbation control process by means of the injector 2c is carried out using an air-fuel ratio control parameter modified in accordance with the control map for the downwardly modified reference valve opening time Atd (step 38). Then, step 31 and subsequent steps of the perturbation control process are repeated. In the present case, the air-fuel ratio control parameter may be any one of the jump value J, the ramp rate R, and the delay D, and at least one of these parameters is reset to a decreased value to implement the perturbation control process.

If the actual valve opening time At is equal to the upwardly modified reference valve opening time Ati, which is longer than the reference valve opening time Bt, the perturbation control process by means of the injector 2c is carried out using an air-fuel ratio control parameter modified in accordance with the control map for the upwardly modified reference valve opening time Ati (step 39). Then, step 31 and subsequent steps of the perturbation control process are repeated. In the present case, the air-fuel ratio control parameter may be any one of the jump value J, the ramp rate R, and the delay D, and at least one of these parameters is reset to an increased value to implement the perturbation control process.

As mentioned earlier, after the perturbation control process is started, the variation range of the air-fuel ratio obtained from the UEGO sensor 31 is compared with the variation range that would result from the perturbation control process using the reference opening degree B. The calorie change of the fuel gas is estimated from the discrepancy between these variation ranges. Then, the air-fuel ratio control parameter(s) is/are reset so that the UEGO sensor 31 indicates an appropriate variation range of the air-fuel ratio, or a range that would result from the perturbation control process using the reference opening degree B and the reference fuel gas.

In the gas engine 1 arranged as above, the calorie changes of the fuel gas are known by appreciating approximately how much the actual valve opening time At differs from the reference valve opening time Bt.

In addition, the stoichiometric operation, lean operation, and perturbation control are carried out on the gas engine 1 after resetting the valve opening time At of the injector 2c from the reference valve opening time Bt either to the upwardly modified reference valve opening time Ati or to the downwardly modified reference valve opening time Atd, to take the discrepancy into account. For this reason, the air-fuel ratio control parameter(s), such as the jump value J and/or the ramp rate R, is/are determined appropriately, and a wide purification window W is maintained during the perturbation control process, as illustrated in FIG. 6. This arrangement extends the period over which exhaust gas purifying capability is maintained, requiring less frequent maintenance. The arrangement also does not require an increased amount of noble metal in the catalyst or an increased capability of the catalyst, which prevents additional catalyst-related cost. Furthermore, the gas engine 1 can run even when fuel gas with large calorie changes is used. The arrangement further enables the use of the gas engine 1 across countries and regions where fuel gas has different calories.

These effects are enhanced by adjusting, during the perturbation control process by means of the injector 2c, the valve opening time of the injector 2c in proportion to the amount of adjustment of the valve opening time that is reset from the reference valve opening time Bt either to the upwardly modified reference valve opening time Ati or to the downwardly modified reference valve opening time Atd.

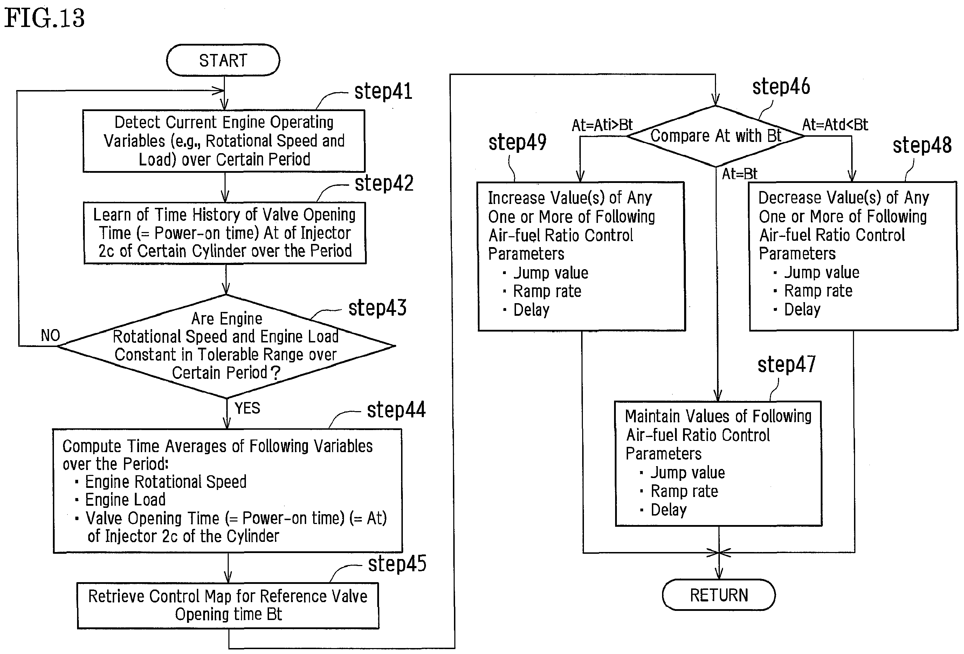

FIG. 13 shows a control process, implemented on a gas engine 1 including an air intake section constituted by injectors 2c, one for each cylinder head 11, that takes calorie changes of fuel gas into account.

First, the gas engine 1 starts stoichiometric operation where the air excess ratio is equal to the theoretical air-fuel ratio (λ = 1). This stoichiometric operation is carried out by adjusting the valve opening time (= power-on times) of the injectors 2c. The stoichiometric operation would proceed as expected if fuel gas is supplied with the injectors 2c being opened to the reference valve opening time Bt, provided that the gas engine 1 is running at the engine rotational speed and under the engine load based on which the reference valve opening time Bt was specified. However, the fuel gas supplied to the gas engine 1 during actual operation may not have the same composition as the fuel gas that was used in determining the reference valve opening time Bt. The fuel gas may vary and have higher or lower calories over the course of the day.

To learn of the calorie changes of the fuel gas, first, the engine rotational speed and engine load are detected during stoichiometric operation over the course of a certain period (step 41). If reference fuel gas is supplied, the injectors 2c is opened to the reference valve opening time Bt. However, if the fuel gas has a lower calorie than the reference fuel gas, the actual valve opening time At of the injectors 2c is equal to the upwardly modified reference valve opening time Ati, which achieves an opening degree higher than does the reference valve opening time Bt. On the other hand, if the fuel gas has a higher calorie than the reference fuel gas, the actual valve opening time At of the injectors 2c is equal to the downwardly modified reference valve opening time Atd, which achieves an opening degree higher than does the reference valve opening time Bt.

Accordingly, the time history of the valve opening time At of the injectors 2c over the course of the certain period over which the engine rotational speed and engine load during stoichiometric operation were detected is detected (step 42).

Of the certain period over which the engine rotational speed and engine load during stoichiometric operation were detected, the period during which the engine rotational speed and engine load were constant is detected (step 43).

If the period during which the engine rotational speed and engine load were constant does not reach a predetermined length of time, it indicates that the actual valve opening time At is unstable. Step 41 and subsequent steps of the perturbation control process are repeated until a stable valve opening time At is registered. On the other hand, if the period during which the engine rotational speed and engine load were constant reaches the predetermined length of time, the detected value is taken as the actual valve opening time At (step 44).

Next, a control map for the reference valve opening time Bt is loaded (step 45) to compare the actual valve opening time At with the reference valve opening time Bt (step 46).

If the actual valve opening time At is equal to the reference valve opening time Bt, a perturbation control process by means of the injectors 2c is carried out using an air-fuel ratio control parameter in accordance with the control map for the reference valve opening time Bt (step 47). Then, step 41 and subsequent steps of the perturbation control process are repeated.

If the actual valve opening time At is equal to the downwardly modified reference valve opening time Atd, which is shorter than the reference valve opening time Bt, the perturbation control process by means of the injectors 2c is carried out using an air-fuel ratio control parameter modified in accordance with the control map for the downwardly modified reference valve opening time Atd (step 48). Then, step 41 and subsequent steps of the perturbation control process are repeated. In the present case, the air-fuel ratio control parameter may be any one of the jump value J, the ramp rate R, and the delay D, and at least one of these parameters is reset to a decreased value to implement the perturbation control process.

If the actual valve opening time At is equal to the upwardly modified reference valve opening time Ati, which is longer than the reference valve opening time Bt, the perturbation control process by means of the injectors 2c is carried out using an air-fuel ratio control parameter modified in accordance with the control map for the upwardly modified reference valve opening time Ati (step 49). Then, step 41 and subsequent steps of the perturbation control process are repeated. In the present case, the air-fuel ratio control parameter may be any one of the jump value J, the ramp rate R, and the delay D, and at least one of these parameters is reset to an increased value to implement the perturbation control process.

As mentioned earlier, after the perturbation control process is started, the variation range of the air-fuel ratio obtained from the UEGO sensor 31 is compared with the variation range that would result from the perturbation control process using the reference opening degree B. The calorie change of the fuel gas is estimated from the discrepancy between these variation ranges. Then, the air-fuel ratio control parameter(s) is/are reset so that the UEGO sensor 31 indicates an appropriate variation range of the air-fuel ratio, or a range that would result from the perturbation control process using the reference opening degree B and the reference fuel gas.

In the gas engine 1 arranged as above, the UEGO sensor 31 is provided on the inlet side of the three-way catalyst 3b. Alternatively, the UEGO sensor 31 may be either replaced by an HEGO sensor or used in combination with an HEGO sensor. If the UEGO sensor 31 is replaced by an HEGO sensor, the output amplitude of the HEGO sensor may not accurately represent the actual amplitude of the air-fuel ratio. Therefore, a correction may need to be done either according to the ratio of the difference between the reference opening degree B and the upwardly modified reference opening degree Ai or the downwardly modified reference opening degree Ad or according to the ratio of the difference between the reference valve opening time Bt and the upwardly modified reference valve opening time Ati or the downwardly modified reference valve opening time Atd.

The gas engine 1 arranged as above is capable of switching between stoichiometric operation and lean operation. Alternatively, the gas engine 1 may be capable of only stoichiometric operation.

The gas engine 1 arranged as above provides effects that are similar to those achieved by the aforementioned gas engine 1 that includes a single injector 2c.

Each gas engine 1 arranged as above is preferably used as a power source for a gas heat pump (not shown). Each gas engine 1 is also preferably used as a power source for a cogenerator (not shown).

The embodiments above describe gas engines. Apart from each gas engine 1 described above, the invention is also applicable to various engines in which perturbation is controlled.

The present invention may be implemented in various forms without departing from its spirit and main features. Therefore, the aforementioned examples are for illustrative purposes only in every respect and should not be subjected to any restrictive interpretations. The scope of the present invention is defined only by the claims.

### Reference Signs List

- 1: Gas Engine
- 10: Control Unit
- 2: Air Intake Section
- 2c: Injector
- 20: Fuel-flow-rate-regulating Valve
- 21: Solenoid Valve
- 22: A/F Valve
- 31: UEGO Sensor
- 32: HEGO Sensor
- A: Actual Opening Degree
- At: Actual Valve Opening Time
- Ai: Upwardly Modified Reference Opening Degree
- Ati: Upwardly Modified Reference Valve Opening Time
- Ad: Downwardly Modified Reference Opening Degree
- Atd: Downwardly Modified Reference Valve Opening Time
- B: Reference Opening Degree
- Bt: Reference Valve Opening Time
- J: Jump Value (Air-fuel Ratio Control Parameter)
- R: Ramp Rate (Air-fuel Ratio Control Parameter)
- D: Delay (Air-fuel Ratio Control Parameter)

## Claims

1. A gas engine (1) that controls an air-fuel ratio by means of a single fuel-flow-rate-regulating valve (20) set up so as to open to a valve opening degree (A) equal to a reference opening degree (B) during a stoichiometric operation created using reference fuel gas,
said gas engine (1) comprising a control unit (10) that: during actual operation, detects time history of the valve opening degree (A) over a certain period during said stoichiometric operation over which the engine rotational speed and engine load were detected; and controls perturbation of the valve opening degree (A) by resetting at least one of control parameters for the valve (20), a jump value by which the valve (20) is rapidly opened in a predetermined time, a ramp rate at which the valve (20) is opened more moderately than a jump subsequent to the jump, and a delay that lasts until the valve (20) starts to be rapidly closed subsequent to the ramp, to a decreased value when, during actual operation, the valve opening degree (A) during said stoichiometric operation is lower than the reference opening degree (B) and by resetting at least one of the control parameters for the valve (20) to an increased value when, during actual operation, the valve opening degree (A) in the stoichiometric operation is higher than the reference opening degree (B),**characterized in that** calorie changes of the fuel gas are known by appreciating approximately how much the actual valve opening degree (A) differs from the reference opening degree (B).

2. The gas engine (1) as set forth in claim 1, comprising two or more of said valve that provide a necessary flow rate achieved by the single valve (20).

3. The gas engine (1) as set forth in claim 2, wherein:
said gas engine (1) controls the air-fuel ratio by means of two or more of said valve (20);
the valves (20) include a first valve and a second valve, the first valve having a lower responsiveness and a greater fuel flow rate adjustment range than the second valve;
said gas engine (1) performs perturbation by means of the second valve;
the first valve has a valve opening degree adjusted and a reference opening degree specified so that the second valve opens to a valve opening degree equal to a predetermined value during said stoichiometric operation created using the reference fuel gas; and
said gas engine (1) comprising a control unit (10) that: during actual operation, detects time history of the opening degree of the first valve over a certain period during said stoichiometric operation over which the engine rotational speed and engine load were detected; and controls perturbation by resetting at least one of control parameters for the second valve, a jump value by which the valve is rapidly opened in a predetermined time, a ramp rate at which the valve is opened more moderately than a jump subsequent to the jump, and a delay that lasts until the valve starts to be rapidly closed subsequent to the ramp, to a decreased value when, during actual operation, the opening degree of the first valve during said stoichiometric operation is lower than the specified reference opening degree and by resetting at least one of the control parameters for the second valve to an increased value when, during actual operation, the opening degree of the first valve during said stoichiometric operation is higher than the specified reference opening degree.

4. A gas engine (1) that controls an air-fuel ratio by means of a single injector (2c) set up so as to open to a valve opening time equal to a reference valve opening time during a stoichiometric operation created using reference fuel gas,
said gas engine (1) comprising a control unit (10) that: during actual operation, detects time history of the valve opening time (At) of the injector (2c) over a certain period during said stoichiometric operation over which the engine rotational speed and engine load were detected; and controls perturbation of the valve opening time (At) of the injector (2c) by resetting at least one of control parameters for the injector (2c), a jump value by which the valve is rapidly opened in a predetermined time, a ramp rate at which the valve is opened more moderately than a jump subsequent to the jump, and a delay that lasts until the valve starts to be rapidly closed subsequent to the ramp, to a decreased value when, during actual operation, the valve opening time (At) during said stoichiometric operation is lower than the reference valve opening time (Bt) and by resetting at least one of the control parameters for the injector (2c) to an increased value when, during actual operation, the valve opening time (At) during said stoichiometric operation is higher than the reference valve opening time (Bt),**characterized in that** calorie changes of the fuel gas are known by appreciating approximately how much the actual valve opening time (At) of the injector (2c) differs from the reference valve opening time (Bt).

5. The gas engine (1) as set forth in claim 4, wherein:
said gas engine (1) includes said injector (2c) for each cylinderhead (11) or for each set of cylinder heads (11).

6. The gas engine (1) as set forth in any one of claims 1 to 5, wherein:
there is provided an air-fuel-ratio sensor of universal exhaust gas oxygen type (31) upstream of catalyst in an exhaust path (13); and
the control unit (10) controls perturbation based on an air-fuel ratio measured by the air-fuel-ratio sensor (31) and estimates a gas calorie from a variation range of the measured air-fuel ratio to adjust an air-fuel ratio control parameter.

## Patentansprüche

1. Ein Gasmotor (1), der ein Luft-Kraftstoff-Verhältnis mittels eines einzelnen Kraftstoff-Strömungsraten-Regulierventils (20) steuert, das so eingerichtet ist, dass es sich zu einem Ventilöffnungsgrad (A) öffnet, der gleich einem Referenzöffnungsgrad (B) während eines stöchiometrischen Betriebs ist, der unter Verwendung von Referenzkraftstoffgas erzeugt wird,
wobei der Gasmotor (1) eine Steuereinheit (10) umfasst, welche: während des gegenwärtigen Betriebs die Verlaufsgeschichte des Ventilöffnungsgrades (A) über einen bestimmten Zeitraum während des stöchiometrischen Betriebs ermittelt, über welchen die Umdrehungsgeschwindigkeit des Motors und die Motorlast ermittelt wurden; und eine Störung des Ventilöffnungsgrades (A) durch Zurücksetzen von zumindest einem Steuerungsparameter für das Ventil (20), einen Sprungwert, durch welchen das Ventil (20) schnell in einer vorbestimmten Zeit geöffnet wird, eine Anstiegsrate mit der das Ventil (20) nach dem Sprung moderater als ein Sprung geöffnet wird, und eine Verzögerung, die so lange andauert, bis das Ventil (20) nach dem Anstieg beginnt, auf einen verringerten Wert schnell geschlossen zu werden, wenn während des gegenwärtigen Betriebs der Ventilöffnungsgrad (A) während des stöchiometrischen Betriebs niedriger ist als der Referenzöffnungsgrad (B), und durch Zurücksetzen von zumindest einem der Steuerungsparameter für das Ventil (20) auf einen erhöhten Wert, wenn während des gegenwärtigen Betriebs der Ventilöffnungsgrad (A) in dem stöchiometrischen Betrieb höher ist als der Referenzöffnungsgrad (B), steuert,
**dadurch gekennzeichnet, dass** Brennwertänderungen des Kraftstoffgases durch ein näherungsweises Abschätzen inwieweit sich der gegenwärtige Ventilöffnungsgrad (A) von dem Referenzöffnungsgrad (B) unterscheidet, bekannt sind.

2. Der Gasmotor (1) nach Anspruch 1, umfassend zwei oder mehr der Ventile, welche eine notwendige Strömungsrate bereitstellen, welche durch das einzelne Ventil (20) erreicht wird.

3. Der Gasmotor (1) nach Anspruch 2, wobei:
der Gasmotor (1) das Luft-Kraftstoff-Verhältnis mittels zwei oder mehr der Ventile (20) steuert;
wobei die Ventile (20) ein erstes Ventil und ein zweites Ventil enthalten, und das erste Ventil eine niedrigere Ansprechempfindlichkeit und einen größeren Kraftstoffströmungsrateneinstellbereich als das zweite Ventil aufweist;
wobei der Gasmotor (1) eine Störung mittels des zweiten Ventils durchfuhrt;
und das erste Ventil einen eingestellten Ventilöffnungsgrad und einen spezifizierten Referenzöffnungsgrad aufweist, so dass sich das zweite Ventil auf einen Ventilöffnungsgrad öffnet, der gleich ist zu einem vorbestimmten Wert während des stöchiometrischen Betriebs, der unter Verwendung des Referenzkraftstoffgases erzeugt wird; und
der Gasmotor (1) eine Steuereinheit (10) umfasst, welche: während des gegenwärtigen Betriebs die Zeitbilanz des Ventilöffnungsgrades über einen bestimmten Zeitraum während des stöchiometrischen Betriebs ermittelt, über welchen die Umdrehungsgeschwindigkeit des Motors und die Motorlast ermittelt wurden; und eine Störung des Ventilöffnungsgrades durch Zurücksetzen von zumindest einem Steuerungsparameter für das zweite Ventil, einen Sprungwert durch welchen das Ventil rasch in einer vorbestimmten Zeit geöffnet wird, eine Anstiegsrate mit der das Ventil nach dem Sprung moderater als ein Sprung geöffnet wird, und eine Verzögerung, die so lange andauert, bis das Ventil nach dem Anstieg beginnt rasch auf einen verringerten Wert geschlossen zu werden, wenn während des gegenwärtigen Betriebs der Öffnungsgrad des ersten Ventils während des stöchiometrischen Betriebs niedriger ist als der spezifizierte Referenzöffnungsgrad, und durch Zurücksetzen von zumindest einem der Steuerungsparameter für das zweite Ventil auf einen erhöhten Wert, wenn während des gegenwärtigen Betriebs der Öffnungsgrad des ersten Ventils während des stöchiometrischen Betriebs höher ist als der spezifizierte Referenzöffnungsgrad, steuert.

4. Ein Gasmotor (1), der ein Luft-Kraftstoff-Verhältnis mittels eines einzelnen Einspritzers (2c) steuert, der so eingerichtet ist, um sich zu einer Ventilöffnungszeit zu öffnen, die gleich ist zu einer Referenzventilöffnungszeit während eines stöchiometrischen Betriebs, der unter Verwendung von Referenzkraftstoffgas erzeugt wird,
wobei der Gasmotor (1) eine Steuereinheit (10) umfasst, welche: während des gegenwärtigen Betriebs die Zeitbilanz der Ventilöffnungszeit (At) des Einspritzers (2c) über einen bestimmten Zeitraum während des stöchiometrischen Betriebs ermittelt, über welchen die Umdrehungsgeschwindigkeit des Motors und die Motorlast ermittelt wurden; und eine Störung der Ventilöffnungszeit (At) des Einspritzers (2c) durch Zurücksetzen von zumindest einem Steuerungsparameter für den Einspritzer (2c), ein Sprungventil, durch welches das Ventil schnell in einer vorbestimmten Zeit geöffnet wird, eine Anstiegsrate mit der das Ventil moderater als ein Sprung nach dem Sprung geöffnet wird, und eine Verzögerung, die so lange andauert, bis das Ventil nach dem Anstieg beginnt rasch auf einen verringerten Wert geschlossen zu werden, wenn während des gegenwärtigen Betriebs die Ventilöffnungszeit (At) während des stöchiometrischen Betriebs niedriger ist als die Referenzventilöffnungszeit (Bt), und durch Zurücksetzen von zumindest einem der Steuerungsparameter für den Einspritzer (2c) auf einen erhöhten Wert, wenn während des gegenwärtigen Betriebs die Ventilöffnungszeit (At) während des stöchiometrischen Betriebs höher ist als die Referenzventilöffnungszeit (Bt), steuert, **dadurch gekennzeichnet, dass** Brennwertänderungen des Kraftstoffgases durch ein näherungsweises Abschätzen inwieweit sich die gegenwärtige Ventilöffnungszeit (At) des Einspritzers (2c) von der Referenzventilöffnungszeit (Bt) unterscheidet, bekannt sind.

5. Der Gasmotor (1) nach Anspruch 4, wobei:
der Gasmotor (1) den Einspritzer (2c) für jeden Zylinderkopf (11) oder für jeden Satz von Zylinderköpfen (11) enthält.

6. Der Gasmotor (1) nach einem der Ansprüche 1 bis 5, wobei:
ein Luft-Kraftstoff-Verhältnis-Sensor (31) vom universellen Abgas-Sauerstoff=Typ stromaufwärts des Katalysators in einem Abgasweg (13) angeordnet ist; und
die Steuereinheit (10) die Störung basierend auf einem Luft-Sauerstoff-Verhältnis steuert, das durch den Luft-Kraftstoff-Verhältnis-Sensor (31) gemessen wird, und einen Gasbrennwert aus einem Variationsbereich des gemessenen Luft-Kraftstoff-Verhältnisses abschätzt, um einen Luft-Kraftstoff-Steuerungsparameter einzustellen.

## Revendications

1. Un moteur à gaz (1) qui contrôle un rapport air-carburant au moyen d'une seule soupape de régulation de débit de carburant (20) agencée pour s'ouvrir à un degré d'ouverture de soupape (A) égal à un degré d'ouverture de référence (B) pendant une opération stoechiométrique générée en utilisant un gaz combustible de référence,
dans lequel le moteur à gaz (1) comprend une unité de contrôle (10) qui, au cours de l'opération en cours, détermine l'historique de flux du degré d'ouverture de soupape (A) sur une certaine période de temps pendant l'opération stoechiométrique par laquelle la vitesse de rotation du moteur et la charge de moteur ont été déterminées; et contrôle une perturbation du degré d'ouverture de soupape (A) en réinitialisant au moins un paramètre de contrôle pour la soupape (20), une valeur de la paille par laquelle la soupape (20) est rapidement ouverte dans un temps prédéterminé, une vitesse d'augmentation avec laquelle la soupape (20) pendant la période stoechiométrique et un délai qui se poursuit jusqu'à ce que la soupape (20), après la montée, commence à être rapidement fermée à une valeur réduite lorsque, pendant l'opération en cours le degré d'ouverture de la soupape (A) pendant la période stoechiométrique est inférieur au degré d'ouverture de référence (B) et en réinitialisant au moins l'un des paramètres de contrôle de la soupape (20) à une valeur accrue lorsque, pendant l'opération en cours, le degré d'ouverture de soupape (A) dans l'opération stoechiométrique est supérieur au degré d'ouverture de référence (B),
**caractérisé en ce que** les changements de la chaleur de combustion du gaz combustible sont connus par une estimation approximative quant à la mesure dans laquelle le degré d'ouverture de soupape actuel (A) diffère du degré d'ouverture de référence (B).

2. Le moteur à gaz (1) selon la revendication 1, comprenant deux ou plusieurs des soupapes qui fournissent un débit nécessaire qui est atteint par la soupape seule (20).

3. Le moteur à gaz (1) selon la revendication 2, dans lequel:
le moteur à gaz (1) contrôle le rapport air-carburant au moyen de deux ou plusieurs des soupapes (20);
lesdites soupapes (20) comprenant une première soupape et une seconde soupape, ladite première soupape ayant une sensibilité de réponse inférieure et une plage de réglage de débit de carburant plus grande que ladite seconde soupape;
dans lequel le moteur à gaz (1) effectue une perturbation au moyen de la seconde soupape;
et la première soupape a un degré d'ouverture de soupape réglé et un degré d'ouverture de référence spécifié de sorte que la seconde soupape s'ouvre à un degré d'ouverture de soupape égal à une valeur prédéterminée pendant l'opération stoechiométrique générée en utilisant le gaz combustible de référence; et
le moteur à gaz (1) comprend une unité de contrôle (10) qui, au cours de l'opération en cours, détermine l'historique progressif du degré d'ouverture de la soupape sur une certaine période pendant l'opération stoechiométrique au moyen de laquelle la vitesse de rotation du moteur et la charge du moteur ont été déterminées; et une perturbation du degré d'ouverture de la soupape en réinitialisant au moins un paramètre de contrôle pour la deuxième soupape, une valeur de pas par laquelle la soupape est rapidement ouverte dans un temps prédéterminé, une vitesse de montée avec laquelle la soupape est ouverte plus modérément qu'un saut après le saut, qui se poursuit jusqu'à ce que la soupape commence à se fermer rapidement après la montée à une valeur réduite lorsque, pendant l'opération en cours, le degré d'ouverture de la première soupape pendant l'opération stoechiométrique est inférieur au degré d'ouverture de référence spécifié et en réinitialisant au moins l'un des paramètres de contrôle pour la deuxième soupape à une valeur accrue lorsque, pendant l'opération en cours, le degré d'ouverture de la première soupape pendant l'opération stoechiométrique est supérieur au degré d'ouverture de référence spécifié.

4. Un moteur à gaz (1) qui contrôle un rapport air-carburant au moyen d'un seul injecteur (2c) agencé pour s'ouvrir à un temps d'ouverture de soupape égal à un temps d'ouverture de soupape de référence pendant un fonctionnement stoechiométrique en utilisation du gaz combustible de référence,
dans lequel le moteur à gaz (1) comprend une unité de contrôle (10) qui, pendant l'opération en cours, détermine l'historique de flux du temps d'ouverture de la soupape (At) de l'injecteur (2c) sur une certaine période de temps pendant l'opération stoechiométrique au moyen de laquelle la vitesse de rotation du moteur et la charge du moteur ont été identifiées; et une perturbation du temps d'ouverture de la soupape (At) de l'injecteur (2c) en réinitialisant au moins un paramètre de contrôle pour l'injecteur (2c), une soupape graduée par laquelle la soupape est rapidement ouverte dans un temps prédéterminé étape après l'ouverture du saut et un délai qui se poursuit jusqu'à ce que la soupape commence à augmenter après que la montée soit rapidement fermée à une valeur réduite lorsque le temps d'ouverture de la soupape (At) est plus faible pendant le fonctionnement stoechiométrique pendant l'opération en cours le temps d'ouverture de la soupape de référence (Bt) et en réinitialisant au moins l'un des paramètres de contrôle pour l'injecteur (2c) à une valeur accrue lorsque le temps d'ouverture de la soupape (At) est plus élevé pendant le fonctionnement stoechiométrique que le temps d'ouverture de la soupape de référence (Bt),
**caractérisé en ce que** les changements de la chaleur de combustion du gaz combustible sont connus en approchant de la distance à laquelle le temps d'ouverture de la soupape (At) de l'injecteur (2c) actuel diffère du temps d'ouverture de la soupape de référence (Bt).

5. Le moteur à gaz (1) selon la revendication 4, dans lequel:
le moteur à gaz (1) comprend l'injecteur (2c) pour chaque culasse (11) ou pour chaque ensemble de culasses (11).

6. Le moteur à gaz (1) selon l'une des revendications 1 à 5, dans lequel:
un capteur de rapport air-carburant (31) du type gaz d'oxygène d'échappement est disposé en amont du catalyseur dans un chemin d'échappement (13); et
l'unité de contrôle (10) contrôle la perturbation sur la base d'un rapport air-oxygène mesuré par le capteur de rapport air-carburant (31) et estime une valeur de combustion du gaz en une plage de variation du rapport air-carburant mesuré pour ajuster un paramètre de contrôle de l'air-carburant.
